# EUROPEAN PATENT APPLICATION

(11) **EP 4 653 246 A1**
(43) Date of publication of application: **26.11.2025**
(21) Application number: 23920413.4
(22) Date of filing: 09.02.2023
(51) Int. Cl.: B60L 53/16, B60L 53/60, B60L 53/31, H02J 7/00

(54) **VEHICLE, VEHICLE CHARGING SYSTEM AND METHOD, AND COMPUTER READABLE STORAGE MEDIUM**

(71) Applicant: Contemporary Amperex Technology Co., Limited, Ningde, Fujian 352100 (CN)
(72) Inventor: LIN, Yanghui, Ningde, Fujian 352100 (CN); QIU, Dong, Ningde, Fujian 352100 (CN); JIAO, Hongzhe, Ningde, Fujian 352100 (CN); WEN, Zuoteng, Ningde, Fujian 352100 (CN)
(74) Representative: Gong, Jinping
(86) International application number: PCT/CN2023/075103
(87) International publication number: WO 2024/164205

(57) **Abstract**

The present application discloses a vehicle, a vehicle charging system and method, and a computer-readable storage medium. The vehicle charging system includes: a first detection loop, configured to detect a connection status of a first charging gun; a second detection loop, configured to detect connection statuses of a plurality of second charging guns; a first charging loop, configured to charge a power battery of a vehicle through the first charging gun; a plurality of second charging loops, where the plurality of second charging loops are in one-to-one correspondence with the plurality of second charging guns, and each second charging loop is configured to charge the power battery through a corresponding charging gun; and a controller, configured to determine the connection status of the first charging gun and the connection statuses of the plurality of second charging guns, and control the first charging loop and the plurality of second charging loops according to a charging parameter corresponding to the connection status, to charge the power battery.

## Description

### TECHNICAL FIELD

The present application relates to the field of vehicle technologies, and specifically, to a vehicle, a vehicle charging system and method, and a computer-readable storage medium.

### BACKGROUND

An electric vehicle is an environmentally-friendly vehicle, and a power battery is disposed on the electric vehicle to provide driving power for the electric vehicle. When electric power is insufficient, the power battery is charged through a charging pile.

In the related art, a connection signal detection resource of a direct current charging gun of the vehicle corresponds to a charging gun, and it is difficult to implement multi-gun fast charging.

### SUMMARY

In view of the foregoing problem, the present application provides a vehicle, a vehicle charging system and method, and a computer-readable storage medium, to implement multi-gun fast charging.

According to a first aspect, the present application provides a vehicle charging system. The system includes: a first detection loop, configured to detect a connection status of a first charging gun; a second detection loop, configured to detect connection statuses of a plurality of second charging guns; a first charging loop, configured to charge a power battery of a vehicle through the first charging gun; a plurality of second charging loops, where the plurality of second charging loops are in one-to-one correspondence with the plurality of second charging guns, and each second charging loop is configured to charge the power battery through a corresponding charging gun; and a controller, configured to determine the connection status of the first charging gun and the connection statuses of the plurality of second charging guns, and control the first charging loop and the plurality of second charging loops according to a charging parameter corresponding to the connection status, to charge the power battery.

In the technical solution in the embodiments of the present application, the connection status of the first charging gun is detected through the first detection loop, and the connection statuses of the plurality of second charging guns are detected through the second detection loop. The first charging loop charges the power battery of the vehicle through the first charging gun, the plurality of second charging loops are in one-to-one correspondence with the plurality of second charging guns, and each second charging loop charges the power battery through the corresponding charging gun. The controller determines the connection status of the first charging gun and the connection statuses of the plurality of second charging guns, and controls the first charging loop and the plurality of second charging loops according to the charging parameter corresponding to the connection status, to charge the power battery. In this way, in a vehicle charging process, connection statuses of a plurality of charging guns may be detected through a two-way detection loop, to determine a quantity of charging guns that are currently in the connected state, determine corresponding charging parameters based on the connection statuses of the charging guns, and control the charging loop. In this way, the system can implement multi-gun fast charging based on the two-way detection loop.

In some embodiments, the vehicle charging system further includes: a first charging interface, where a first connection confirming end of the first charging interface is connected to the first detection loop, and the connection status of the first charging gun is determined by detecting, through the first detection loop, a voltage of the first connection confirming end; and a plurality of second charging interfaces, where after being connected to each other, a second connection confirming end of each of the plurality of second charging interfaces is connected to the second detection loop, and the connection statuses of the plurality of second charging guns are determined by detecting, through the second detection loop, a voltage of the second connection confirming end.

In some embodiments, both the first detection loop and the second detection loop include: a voltage dividing circuit, where an input end of the voltage dividing circuit is connected to a corresponding connection confirming end, and is configured to divide a voltage of the corresponding connection confirming end to obtain a first voltage; and a filter circuit, where an input end of the filter circuit is connected to an output end of the voltage dividing circuit, and is configured to filter the first voltage to obtain a second voltage; and the controller is connected to an output end of the filter circuit, and is configured to determine a connection status of the corresponding charging gun according to the second voltage.

In some embodiments, the voltage dividing circuit includes: a first resistor, where a first end of the first resistor is connected to a preset power supply; a second resistor, where a first end of the second resistor and a second end of the first resistor are connected and form a first node, a second end of the second resistor is grounded, and the first node is connected to the corresponding connection confirming end; a third resistor, where a first end of the third resistor is connected to the first node, and a second end of the third resistor is connected to the input end of the filter circuit; and a fourth resistor, where a first end of the fourth resistor is connected to the second end of the third resistor, and a second end of the fourth resistor is grounded.

In some embodiments, the filter circuit includes: a fifth resistor, where a first end of the fifth resistor is connected to the output end of the voltage dividing circuit, and a second end of the fifth resistor is connected to the controller; and a first capacitor, where a first end of the first capacitor is connected to the second end of the fifth resistor, and a second end of the first capacitor is grounded.

In some embodiments, the first charging gun and each of the plurality of second charging guns include: a sixth resistor, where a first end of the sixth resistor is connected to a third connection confirming end of the corresponding charging gun, and a second end of the sixth resistor is grounded.

In some embodiments, the first charging loop includes: a first charging switch, where a first end of the first charging switch is connected to a positive terminal of the power battery, and a second end of the first charging switch is connected to a first charging connection positive terminal of the first charging interface; and a second charging switch, where a first end of the second charging switch is connected to a negative terminal of the power battery, and a second end of the second charging switch is connected to a first charging connection negative terminal of the first charging interface.

In some embodiments, the second charging loop includes: a third charging switch, where a first end of the third charging switch is connected to a positive terminal of the power battery, and a second end of the third charging switch is separately connected to a second charging connection positive terminal of each of the plurality of second charging interfaces; and a fourth charging switch, where a first end of the fourth charging switch is connected to a negative terminal of the power battery, and a second end of the fourth charging switch is separately connected to a second charging connection negative terminal of each of the plurality of second charging interfaces.

In some embodiments, when there are two second charging guns, the controller is further configured to: determine that a charging mode is a single-gun charging mode if the first charging gun is in a connected state and either of the two second charging guns is in a non-connected state; determine that the charging mode is a dual-gun charging mode if the first charging gun is in the non-connected state and either of the two second charging guns is in the connected state; and determine that the charging mode is a three-gun charging mode if the first charging gun and either of the two second charging guns are in the connected state.

In some embodiments, the controller is further configured to: if the charging mode is a single-gun charging mode, interact with a charging pile in an offset adjustment manner; if the charging mode is a dual-gun charging mode, interact with the charging pile in the offset adjustment manner; and if the charging mode is a three-gun charging mode, interact with the charging pile in a two's complement manner.

In some embodiments, a maximum charging current of a power battery corresponding to the single-gun charging mode is 200 A, a maximum charging current of a power battery corresponding to the dual-gun charging mode is 400 A, and a maximum charging current of a power battery corresponding to the three-gun charging mode is 600 A.

According to a second aspect, the present application provides a vehicle, including the vehicle charging system.

According to the vehicle in embodiments of the present application, based on the foregoing vehicle charging system, in a vehicle charging process, connection statuses of a plurality of charging guns may be detected through a two-way detection loop, to determine a quantity of charging guns that are currently in the connected state, determine corresponding charging parameters based on the connection statuses of the charging guns, and control the charging loop. In this way, the system can implement multi-gun fast charging based on the two-way detection loop.

According to a third aspect, the present application provides a vehicle charging method. The method includes: determining connection statuses of a plurality of charging guns; and controlling a plurality of charging loops of a vehicle according to charging parameters corresponding to the connection statuses, to charge a power battery.

In the technical solution of the embodiments of the present application, a charging mode of the power battery of the vehicle is determined according to the connection statuses of the plurality of charging guns, interaction is performed with a corresponding charging pile according to the charging mode, and then the plurality of charging loops of the vehicle are controlled according to interaction information, to charge the power battery. In this way, in a vehicle charging process, the connection statuses of the plurality of charging guns are detected, to determine a quantity of charging guns that are currently in the connected state, and control the plurality of charging loops based on the connection statuses of the charging guns. In this way, multi-gun fast charging of the vehicle can be implemented in the method.

In some embodiments, the method further includes: determining a charging mode of the power battery of the vehicle according to the connection statuses; and interacting, according to the charging mode, with charging piles corresponding to the plurality of charging guns.

In some embodiments, if the charging mode is a single-gun charging mode, interaction is performed with a charging pile in an offset adjustment manner; if the charging mode is a dual-gun charging mode, interaction is performed with the charging pile in the offset adjustment manner; and if the charging mode is a three-gun charging mode, interaction is performed with the charging pile in a two's complement manner.

In some embodiments, a maximum charging current of a power battery corresponding to the single-gun charging mode is 200 A, a maximum charging current of a power battery corresponding to the dual-gun charging mode is 400 A, and a maximum charging current of a power battery corresponding to the three-gun charging mode is 600 A.

According to a fourth aspect, the present application provides a computer-readable storage medium, storing a program, where the program, when executed by a processor, implements the vehicle charging method.

In the technical solution of the embodiments of the present application, when the computer-readable storage medium executes the program, in the foregoing vehicle charging method, in a vehicle charging process, connection statuses of a plurality of charging guns may be detected through a two-way detection loop, to determine a quantity of charging guns that are currently in the connected state, and control the charging loop based on the connection statuses of the charging guns. In this way, multi-gun fast charging of the vehicle can be implemented.

The foregoing descriptions are only an overview of the technical solution of the present application. In order to better understand the technical means of the present application, it can be practiced in accordance with the contents of the descriptions, and in order to make the above and other objects, features and advantages of the present application more apparent and easy to understand, specific implementations of the present application are set forth below.

### BRIEF DESCRIPTION OF THE DRAWINGS

Various other advantages and benefits will become clear to a person of ordinary skill in the art by reading the following detailed descriptions of exemplary implementations. The accompanying drawings are only for the purpose of illustrating the preferred implementations and are not construed as limiting the present application. In addition, in all the accompanying drawings, same parts are indicated by the same reference numerals. In the accompanying drawings,
FIG. 1 is a schematic block diagram of a vehicle charging system according to some embodiments of the present application;
FIG. 2 is a circuit topology diagram of a vehicle charging system according to some embodiments of the present application;
FIG. 3 is a circuit topology diagram of a first detection loop and a second detection loop according to some embodiments of the present application;
FIG. 4 is an application example diagram of a first detection loop according to some embodiments of the present application;
FIG. 5 is an application example diagram of a second detection loop according to some embodiments of the present application;
FIG. 6 is a circuit topology diagram of a vehicle charging system in the related art;
FIG. 7 is a schematic diagram of a structure of a vehicle according to some embodiments of the present application; and
FIG. 8 is a schematic flowchart of a vehicle charging method according to some embodiments of the present application.

### DETAILED DESCRIPTION

Embodiments of the technical solution of the present application will be described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical and scientific terms used herein have the same meanings as are commonly understood by a person skilled in the art of the present application. Terms used herein are for the purpose of describing specific embodiments only and are not intended to limit the present application. The terms "comprising" and "having" and any variations thereof in the description and claims of the present application and the foregoing descriptions of the accompanying drawings are intended to cover non-exclusive inclusion.

In the descriptions of embodiments of the present application, the technical terms "first", "second", and the like are used only to distinguish different objects and are not understood to indicate or imply relative importance or to imply the number, specific order or primary and secondary relationship of the indicated technical features. In the descriptions of the embodiments of the present application, "a plurality of" means two or more, unless otherwise expressly and specifically defined.

"Embodiment" mentioned in the specification means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

In the descriptions of embodiments of the present application, the term "and/or" herein is simply a description of the association relationship of the associated objects, indicating that three relationships can exist, for example, A and/or B may indicate that A exists alone, A and B exist at the same time, and B exists alone. In addition, the character "/" in this specification generally indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces).

In the related art, a vehicle is provided with connection signal detection resources of two-way direct current charging guns, to separately detect connection statuses of two charging guns. Consequently, it is difficult to implement multi-gun fast charging.

To resolve the foregoing problem that it is difficult to implement multi-gun fast charging of the vehicle, the present application provides a vehicle charging system. A connection status of a first charging gun is detected through a first detection loop, connection statuses of a plurality of second charging guns are detected through a second detection loop. The first charging loop charges a power battery of the vehicle through the first charging gun, the plurality of second charging loops are in one-to-one correspondence with the plurality of second charging guns, and each second charging loop charges the power battery through the corresponding charging gun. A controller determines a charging mode of the power battery according to the connection status of the first charging gun and the connection statuses of the plurality of second charging guns, interacts with the first charging gun and the plurality of second charging guns according to the charging mode, and controls the first charging loop and the plurality of second charging loops according to the interaction information, to charge the power battery. In this way, in a vehicle charging process, connection statuses of a plurality of charging guns may be detected through a two-way detection loop, to determine a quantity of charging guns that are currently in the connected state, and determine interaction manners with the charging guns and the charging mode of the power battery based on the connection statuses of the charging guns. In this way, the system can implement multi-gun fast charging based on the two-way detection loop.

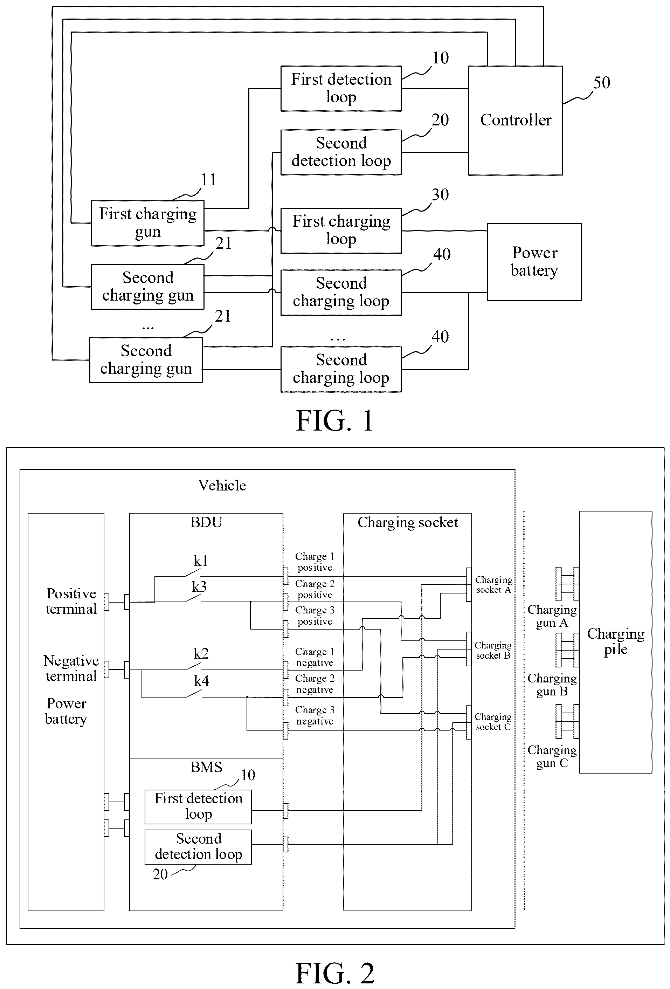

According to some embodiments of the present application, referring to FIG. 1, a vehicle charging system includes: a first detection loop 10, a second detection loop 20, a first charging loop 30, a plurality of second charging loops 40, and a controller 50.

The first detection loop 10 is configured to detect a connection status of a first charging gun 11. The second detection loop 20 is configured to detect connection statuses of a plurality of second charging guns 21. The first charging loop 30 is configured to charge a power battery of a vehicle through the first charging gun 11. The plurality of second charging loops 40 are in one-to-one correspondence with the plurality of second charging guns 21, and each second charging loop 40 is configured to charge the power battery through a corresponding charging gun. The controller 50 is configured to determine the connection status of the first charging gun 11 and the connection statuses of the plurality of second charging guns 21, and control the first charging loop 30 and the plurality of second charging loops 40 according to a charging parameter corresponding to the connection status, to charge the power battery.

The power battery is an energy storage unit of the vehicle, and is a power source of the vehicle. When battery power of the power battery is relatively low, a charging gun of a charging pile is connected to a corresponding charging interface of the vehicle, to charge the power battery of the vehicle. The charging interface is a charging socket that is configured for the vehicle and that matches the charging gun.

Referring to FIG. 1, the charging pile includes one first charging gun 11 and a plurality of second charging guns 21. The first charging gun 11 and/or the plurality of second charging guns 21 are connected to the charging interface on the vehicle, to charge the power battery of the vehicle. When the first charging gun 11 is connected to the corresponding charging interface on the vehicle, the first charging loop 30 in the vehicle is controlled to be connected, to charge the power battery of the vehicle. When the plurality of second charging guns 21 are connected to the corresponding charging interfaces on the vehicle, the plurality of second charging loops 40 are controlled to be connected, to charge the power battery of the vehicle. The charging loops in the vehicle are in one-to-one correspondence with the charging interfaces on the vehicle.

The controller 50 evaluates, according to the connection status of the charging gun, whether the charging interface on the vehicle is connected to the charging gun. When it is determined that the charging interface is connected to the charging gun, the controller 50 charges the power battery by controlling the charging loop corresponding to the charging interface to be connected. It may be understood that, different connection statuses may correspond to different charging modes. Specifically, the first detection loop 10 detects the connection status of the first charging gun 11 and outputs a first detection signal to the controller 50. The second detection loop 20 simultaneously detects the connection statuses of the plurality of second charging guns 21 and outputs second detection signals to the controller 50. The controller 50 determines the connection status between the first charging gun 11 and the charging interface on the vehicle according to the first detection signal, and determines the connection statuses between the plurality of second charging guns 21 and the charging interfaces on the vehicle according to the second detection signals, to further determine the charging mode of the power battery according to the connection status of the first charging gun 11 and the connection statuses of the plurality of second charging guns 21, and determine a charging parameter according to the charging mode, so as to charge the power battery.

The charging parameter may be obtained through communication and interaction between the charging gun and the controller 50. Specifically, after determining the charging mode of the power battery according to the connection status of the first charging gun 11 and the connection statuses of the plurality of second charging guns 21, the controller 50 determines, according to the charging mode, an interaction manner used between a charging pile corresponding to the first charging gun 11 and charging piles corresponding to the plurality of second charging guns 21, and controls the first charging loop 30 and the second charging loop 40 according to the interaction information, to charge the power battery. In an interaction process, the interaction information is sent in a form of a packet. First, the charging pile first sends a handshake packet and a fast charging packet to the vehicle through the charging gun. After receiving the foregoing packet, the vehicle replies a fast charging packet to the charging pile. After receiving a fast charging response packet and a vehicle identification packet that are sent by the vehicle, the corresponding charging pile outputs, according to a current value in the packet sent by the vehicle, a corresponding large current to charge the vehicle. The charging parameter may include a parameter of the power battery of the vehicle that is obtained by the controller 50, and determined parameters such as a charging voltage and a charging current that can be received by the power battery, and may further include a charging output voltage, a charging output current, and the like that are sent by the charging gun. In addition, the exchange information may further include an alarm signal.

The charging mode of the power battery may be a single-gun charging mode, a dual-gun charging mode, a three-gun charging mode, or the like according to a quantity of charging guns in the connected state. The controller 50 may determine, according to the connection status of the first charging gun 11 and the connection statuses of the plurality of second charging guns 21, a quantity of charging guns successfully connected to the charging interfaces on the vehicle, to control the charging mode according to the quantity of charging guns and types of the charging guns.

In this embodiment, in a vehicle charging process, connection statuses of a plurality of charging guns may be detected through a two-way detection loop, to determine a quantity of charging guns that are currently in the connected state, and charge the power battery based on charging parameters corresponding to the connection statuses of the charging guns. In this way, the system can implement multi-gun fast charging based on the two-way detection loop.

According to some embodiments of the present application, optionally, the vehicle charging system further includes: a first charging interface, where a first connection confirming end of the first charging interface is connected to the first detection loop 30, and the connection status of the first charging gun 11 is determined by detecting, through the first detection loop 10, a voltage of the first connection confirming end; and a plurality of second charging interfaces, where after being connected to each other, a second connection confirming end of each of the plurality of second charging interfaces is connected to the second detection loop 20, and the connection statuses of the plurality of second charging guns 21 are determined by detecting, through the second detection loop 20, a voltage of the second connection confirming end.

The first charging interface is a charging socket matching the first charging gun 11, and the second charging interfaces are charging sockets matching the second charging guns 21. In a process in which the vehicle connects to the charging pile, the first charging gun 11 matches the first charging interface and is connected to the first charging interface, and the second charging gun 21 matches the second charging interface and can be connected to the second charging interface. The first detection loop 10 determines, according to a current voltage of the first connection confirming end of the first charging interface, whether the first charging interface is connected to the first charging gun 11, to determine the connection status of the first charging gun 11. The second detection loop 20 determines, according to current voltages of the second connection confirming ends of the second charging interfaces, whether the second charging interfaces are connected to the second charging guns 21, to determine the connection statuses of the second charging guns 21.

In an example, the first detection loop 10 and the second detection loop 20 are disposed in a battery management module (Battery Management System, BMS) of the vehicle. Referring to FIG. 2, the vehicle includes three charging interfaces: a charging interface A, a charging interface B, and a charging interface C. The charging interface A is the first charging interface, and the charging interface B and the charging interface C are the second charging interfaces. That is, the vehicle includes one first charging interface and two second charging interfaces. The charging piles separately include a charging gun A matching the charging interface A, a charging gun B matching the charging interface B, and a charging gun C matching the charging interface C. That is, one first charging gun, namely, the charging gun A and two second charging guns, namely, the charging gun B and the charging gun C, are disposed on the charging piles. A first connection confirming end of the charging interface A is connected to the first detection loop 10, and the first detection loop 10 confirms, according to a voltage of the first connection confirming end of the charging interface A, whether the charging gun A is connected to the charging interface A. After being connected to each other, the second connection confirming end of the charging interface B and the second connection confirming end of the charging interface C are connected to the second detection loop 20, and the second detection loop 20 determines connection statuses of the charging gun B and the charging gun C according to voltages output by the second connection confirming end of the charging interface B and the second connection confirming end of the charging interface C that are connected in parallel. An output end of the first detection loop 10 is connected to one detection input end of the controller, and the controller determines, according to an output signal of the first detection loop 10, whether the charging gun A is connected to the charging interface A. An output end of the second detection loop 20 is connected to another detection input end of the controller. The controller determines, according to an output signal of the second detection loop 20, whether the charging gun B is connected to the charging interface B and the charging gun C is connected to the charging interface C, or either of the charging gun B and the charging gun C is connected to the corresponding charging interface, or the charging gun B is not connected to the charging interface B and the charging gun C is not connected to the charging interface C, to determine the connection statuses of the plurality of second charging guns according to the output signal of the second detection loop 20.

In this embodiment, the first detection loop 10 determines the connection status of the first charging gun 11 based on the voltage at the first connection confirming end of the first charging interface, and the second detection loop 20 determines the connection statuses of the plurality of second charging guns 21 based on the output voltage obtained after the second connection confirming end of each of the plurality of second charging interfaces is connected to each other. Detection of the connection statuses of the plurality of charging guns based on the two detection loops can be implemented, to reduce application costs.

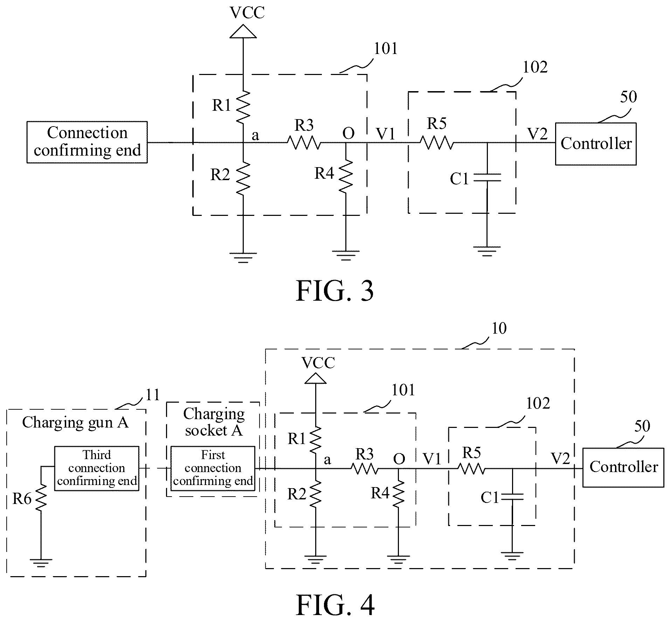

According to some embodiments of the present application, optionally, referring to FIG. 3, both the first detection loop and the second detection loop include: a voltage dividing circuit 101, where an input end of the voltage dividing circuit 101 is connected to a corresponding connection confirming end, and is configured to divide a voltage of the corresponding connection confirming end to obtain a first voltage V1; and a filter circuit 102, where an input end of the filter circuit 102 is connected to an output end of the voltage dividing circuit 101, and is configured to filter the first voltage V1 to obtain a second voltage V2; and the controller 50 is connected to an output end of the filter circuit 102, and is configured to determine a connection status of the corresponding charging gun according to the second voltage V2.

In the first detection loop 10, the input end of the voltage dividing circuit 101 is connected to a first connection confirming end of a first charging interface, and divides a voltage at the first connection confirming end, the first voltage V1 obtained through voltage dividing is filtered through the filter circuit 102 to obtain the second voltage V2, and the second voltage V2 is obtained through filtering. The controller 50 determines the connection status of the first charging gun according to the second voltage V2. In the second detection loop 20, the input end of the voltage dividing circuit 101 is connected to a node obtained after a second connection confirming end of each of a plurality of second charging interfaces is connected to each other. A voltage output by the node is divided to obtain the first voltage V1, the first voltage V1 is filtered through the filter circuit 102 to output the second voltage V2. The controller 50 determines the connection statuses of the plurality of second charging guns according to the second voltage V2.

In this embodiment, voltage dividing and output are first performed on the voltage signal through the voltage dividing circuit 101, to reduce a voltage value detected by the controller 50. Then, a filtering operation based on the filter circuit 102 is performed, to eliminate signal interference and improve detection precision.

According to some embodiments of the present application, optionally, the voltage dividing circuit 101 includes: a first resistor R1, where a first end of the first resistor R1 is connected to a preset power supply VCC; a second resistor R2, where a first end of the second resistor R2 and a second end of the first resistor R1 are connected and form a first node a, a second end of the second resistor R2 is grounded, and the first node a is connected to the corresponding connection confirming end; a third resistor R3, where a first end of the third resistor R3 is connected to the first node a, and a second end of the third resistor R3 is connected to the input end of the filter circuit 102; and a fourth resistor R4, where a first end of the fourth resistor R4 is connected to the second end of the third resistor R3, and a second end of the fourth resistor R4 is grounded.

An output end of the voltage dividing circuit 101 is a node O formed by a connection between the first end of the fourth resistor R4 and the second end of the third resistor R3. The voltage dividing circuit 101 includes a first-level voltage dividing circuit including the first resistor R1 and the second resistor R2, and a second-level voltage dividing circuit including the third resistor R3 and the fourth resistor R4. When a connection confirming end is not connected to a charging gun, the first resistor R1 and the second resistor R2 perform a voltage dividing operation on the preset power supply VCC, and the first node a outputs a corresponding first divided voltage. Then, the first divided voltage is divided through the third resistor R3 and the fourth resistor R4 to obtain the first voltage V1, and the first voltage V1 is output through the node O. When the connection confirming end is connected to the charging gun, the voltage dividing circuit changes, to affect the first voltage V1 output by the node O. The changed first voltage V1 filters the output second voltage V2. In this case, the controller 50 may determine, based on the changed second voltage V2, that the charging gun is connected to the charging interface. The controller 50 may prestore a detection voltage effective range. When the obtained second voltage V2 falls within the detection voltage effective range, the controller 50 determines that the corresponding charging gun is connected to the charging interface; otherwise, the controller 50 considers that the charging gun is not connected to the charging interface. It may be understood that, detection voltage effective ranges corresponding to the first detection loop 10 and the second detection loop 20 should be separately set differently, and are not limited herein.

When the charging gun is connected to the corresponding charging interface, a connection confirming end of the charging interface may be connected to a corresponding electronic component in the charging gun, to change a voltage dividing resistor or an input voltage of the voltage dividing circuit 101, thereby changing the first voltage V1, so as to change an output signal of the detection loop, for example, being connected to a grounded resistor in the charging gun or being connected to a preset electric signal in the charging gun. This is not limited herein. In addition, the voltage dividing circuit 101 may also be set to a one-level voltage dividing circuit or another multi-level voltage dividing circuit, which may be specifically set according to performance of a control chip and detection quality. In addition, the voltage dividing circuit 101 may also use a resistor module as a voltage dividing resistor. This is not limited herein.

In this embodiment, the first resistor R1, the second resistor R2, the third resistor R3, and the fourth resistor R4 perform voltage dividing, so that a value of the output voltage is reduced.

According to some embodiments of the present application, optionally, the filter circuit 102 includes: a fifth resistor R5, where a first end of the fifth resistor R5 is connected to the output end of the voltage dividing circuit 101, and a second end of the fifth resistor R5 is connected to the controller 50; and a first capacitor C1, where a first end of the first capacitor C1 is connected to the second end of the fifth resistor R5, and a second end of the first capacitor C1 is grounded. In other words, the first voltage V1 output by the node O is input into an RC filter including the fifth resistor R5 and the first capacitor C1. A filtering operation is performed on the first voltage V1 through the RC filter, and the second voltage V2 is output to the controller 50.

The foregoing forming the filter circuit 102 through the fifth resistor R5 and the first capacitor C1 is merely an implementation of the present application, which may be specifically set according to an actual condition. For example, the filter circuit 102 may be formed by only a filter capacitor, or may be constructed in another filtering form, to filter out an interference signal in the first voltage V1, thereby ensuring detection accuracy.

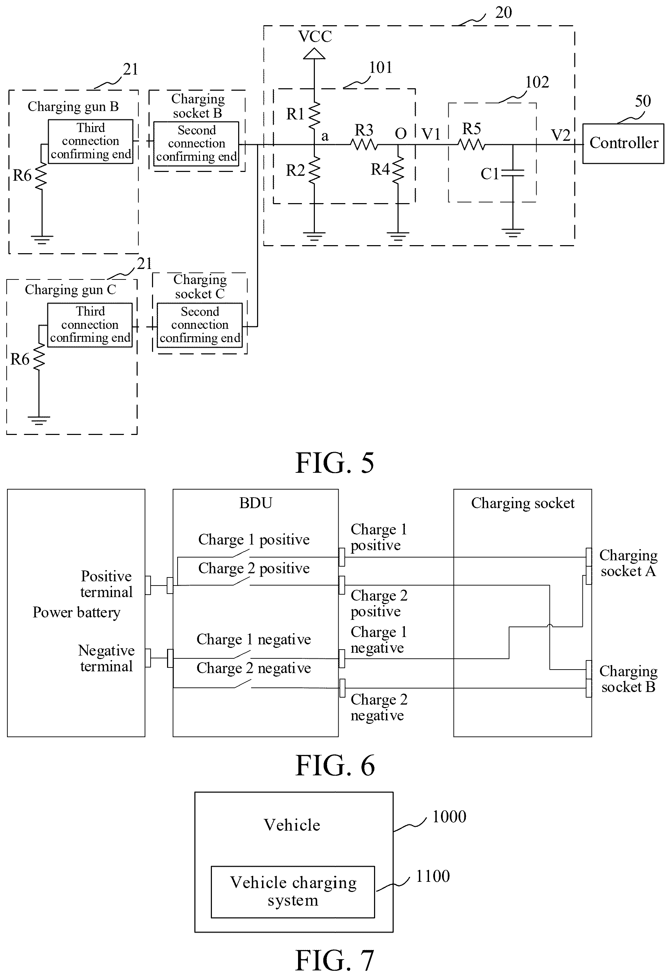

According to some embodiments of the present application, optionally, referring to FIG. 4 and FIG. 5, the first charging gun 11 and each of the plurality of second charging guns 21 include: a sixth resistor R6, where a first end of the sixth resistor R6 is connected to a third connection confirming end of the corresponding charging gun, and a second end of the sixth resistor R6 is grounded.

Still using FIG. 2 as an example, the vehicle includes a charging interface A, a charging interface B, and a charging interface C. The charging interface A is the first charging interface, and the charging interface B and the charging interface C are the second charging interfaces. A charging gun A of a charging pile is connected to the charging interface A, and is the first charging gun 11; and a charging gun B and a charging gun C are respectively connected to the charging interface B and the charging interface C, and are used as the two second charging guns 21. The sixth resistor R6 is separately built in the charging gun A, the charging gun B, and the charging gun C. In the charging gun A, a first end of the sixth resistor R6 is connected to the third connection confirming end of the corresponding charging gun, and the other end of the sixth resistor R6 is grounded. It may be understood that, when the first charging gun 11 is connected to the first charging interface, the third connection confirming end of the first charging gun 11 is connected to the first connection confirming end of the first charging interface. When the second charging gun 21 is connected to the second charging interface, the third connection confirming end of the second charging gun 21 is connected to the second connection confirming end of the second charging gun.

Referring to FIG. 4, when the first charging gun 11, namely, the charging gun A, is connected to the first charging interface, namely, the charging interface A, the third connection end of the charging gun A is connected to the first connection confirming end of the charging interface A. Because the first connection confirming end of the charging interface A is connected to the first detection loop, the first end of the sixth resistor R6 is connected to the first node a of the voltage dividing circuit 101 in the first detection loop. In this case, the voltage dividing circuit 101 performs a voltage dividing operation based on the first resistor R1, the second resistor R2, the third resistor R3, the fourth resistor R4, and the sixth resistor R6, and outputs the corresponding first voltage V1 to the filter circuit 102. The filter circuit 102 filters the first voltage V1 to output the second voltage V2 to the controller 50. The controller 50 determines the connection status of the charging gun A according to the second voltage V2. However, when the charging gun A is not connected to the charging interface A, the voltage dividing circuit 101 performs a voltage dividing operation based on the first resistor R1, the second resistor R2, the third resistor R3, and the fourth resistor R4, and outputs the corresponding first voltage V1 to the filter circuit 102. The filter circuit 102 filters the first voltage V1 to output the second voltage V2 to the controller 50. The controller 50 determines, according to the second voltage V2, that the charging gun A is in a non-connected state. Therefore, the controller 50 may determine, according to parameter setting, a first detection voltage effective range corresponding to the first detection loop 10.

Referring to FIG. 5, when the charging gun B in the second charging gun 21 is connected to the charging interface B in the second charging interface, and when the charging gun C in the second charging gun 21 is connected to the charging interface C in the second charging interface, the third connection end of the charging gun B is connected to the second connection confirming end of the charging interface B, and the third connection end of the charging gun C is connected to the second connection confirming end of the charging interface C. After being connected to each other, the second connection confirming end of the charging interface B and the second connection confirming end of the charging interface C are connected to the second detection loop. Therefore, after being connected to each other, the first end of the sixth resistor R6 in the charging gun B and the first end of the sixth resistor R6 in the charging gun C are connected to the first node a of the voltage dividing circuit 101 in the second detection loop. In this case, the voltage dividing circuit 101 performs a voltage dividing operation based on the first resistor R1, the second resistor R2, the third resistor R3, the fourth resistor R4, and the two sixth resistors R6, and outputs the corresponding first voltage V1 to the filter circuit 102. The filter circuit 102 filters the first voltage V1 to output the second voltage V2 to the controller 50. The controller 50 determines the connection status of the charging gun A according to the second voltage V2. However, when the charging gun B is not connected to the charging interface B and the charging gun C is connected to the charging interface C, or the charging gun C is not connected to the charging interface C and the charging gun B is connected to the charging interface B, the voltage dividing circuit 101 performs a voltage dividing operation based on the first resistor R1, the second resistor R2, the third resistor R3, the fourth resistor R4, and one sixth resistor R6, and outputs the corresponding first voltage V1 to the filter circuit 102. The filter circuit 102 filters the first voltage V1 to output the second voltage V2 to the controller 50. The controller 50 determines, according to a voltage value of the second voltage V2 in this case, that either of the charging gun B and the charging gun C is in the connected state. However, when the charging gun B is not connected to the charging interface B and the charging gun C is not connected to the charging interface C, the voltage dividing circuit 101 performs a voltage dividing operation based on the first resistor R1, the second resistor R2, the third resistor R3, and the fourth resistor R4, and outputs the corresponding first voltage V1 to the filter circuit 102. The filter circuit 102 filters the first voltage V1 to output the second voltage V2 to the controller 50. The controller 50 determines, according to the voltage value of the second voltage V2, that both the charging gun B and the charging gun C are in the non-connected state. In this way, the controller 50 may determine, according to the second voltage V2 output by the second detection loop 20, a quantity of charging guns B and charging guns C that are in the connected state, to control the second detection loop. The controller 50 may determine, according to the parameter setting, a second detection voltage effective range corresponding to the second detection loop 20, and determine the connection statuses of the plurality of second charging guns 21 through the second voltage V2 output by the second detection loop 20. The two sixth resistors R6 in the charging gun B and the charging gun C, after being connected in parallel, are connected to the second detection loop 20. Connection resistance between the charging gun B and the charging gun C becomes smaller after the charging gun B and the charging gun C are connected in parallel. Therefore, a second detection voltage value of the second detection loop 20 is relatively small compared with the first detection voltage value obtained by the first detection loop 10. For example, the first detection voltage obtained by the first detection loop 10 ranges from 1.1 v to 1.36 v, and the second detection voltage value of the second detection loop 20 ranges from 0.5 v to 1.09 v.

In this embodiment, a voltage value output by the detection loop is adjusted through the sixth resistor R6 built in the charging gun, to detect a connection status of the charging gun.

According to some embodiments of the present application, optionally, the first charging loop 30 includes: a first charging switch k1, where a first end of the first charging switch k1 is connected to a positive terminal of the power battery, and a second end of the first charging switch k1 is connected to a first charging connection positive terminal of the first charging interface; and a second charging switch k2, where a first end of the second charging switch k2 is connected to a negative terminal of the power battery, and a second end of the second charging switch k2 is connected to a first charging connection negative terminal of the first charging interface.

Referring to FIG. 2, the first charging loop and the second charging loop are disposed in a measured battery energy distribution unit (Battery energy Distribution Unit, BDU).

When controlling the first charging loop to be connected, the controller needs to simultaneously control the first charging switch k1 to be turned off and the second charging loop k2 to be disconnected. Specifically, still using FIG. 2 as an example, when the charging gun A is connected to the charging interface A, the first charging connection positive terminal of the charging interface A is connected to the charging connection positive terminal of the charging gun A, and the first charging connection negative terminal of the charging interface A is connected to the charging connection negative terminal of the charging gun A. When the controller 50 controls the first charging switch k1 to be turned off, the charging connection positive terminal of the charging gun A is connected to the positive terminal of the power battery, and when the controller 50 controls the second charging switch k1 to be turned off, the charging connection negative terminal of the charging gun A is connected to the negative terminal of the power battery. In this case, the first charging loop is connected, and the charging gun A charges the power battery through the first charging loop.

According to some embodiments of the present application, optionally, the second charging loop 40 includes: a third charging switch k3, where a first end of the third charging switch is connected to a positive terminal of the power battery, and a second end of the third charging switch k3 is separately connected to a second charging connection positive terminal of each of the plurality of second charging interfaces; and a fourth charging switch k4, where a first end of the fourth charging switch is connected to a negative terminal of the power battery, and a second end of the fourth charging switch k4 is separately connected to a second charging connection negative terminal of each of the plurality of second charging interfaces.

When controlling the second charging loop 40 to be connected, the controller 50 needs to simultaneously control the third charging switch k3 and the fourth charging switch k4 to be turned off. In this case, all the second charging interfaces on the vehicle are connected to the power battery through the second charging loop 40. That is, the controller 50 controls the third charging switch k3 and the fourth charging switch k4 to simultaneously enable a plurality of charging loops to be connected or disconnected, so that the plurality of second charging guns simultaneously charge or stop charging the power battery.

Using FIG. 2 as an example, the vehicle includes two second charging interfaces that are respectively the charging interface B and the charging interface C. Correspondingly, the second charging guns are respectively the charging gun B and the charging gun C, and there are two second charging loops that respectively correspond to the charging interface B and the charging interface C. When the charging gun B is connected to the charging interface B and the charging gun C is connected to the charging interface C, the charging connection positive terminal of the charging interface B is connected to the charging connection positive terminal of the charging gun B, and the charging connection negative terminal of the charging interface B is connected to the charging connection negative terminal of the charging gun B. The charging connection positive terminal of the charging interface C is connected to the charging connection positive terminal of the charging gun C, and the charging connection negative terminal of the charging interface C is connected to the charging connection negative terminal of the charging gun C. When the controller 50 controls the third charging switch k3 to be turned off, the charging connection positive terminals of the charging gun B and the charging gun C are connected to the positive terminal of the power battery. When the controller 50 controls the fourth charging switch k4 to be turned off, the charging connection negative terminals of the charging gun C and the charging gun B are connected to the negative terminal of the power battery. In this case, the two second charging loops are connected, and the charging gun B and the charging gun C charge the power battery through the two second charging loops.

According to some embodiments of the present application, optionally, when there are two second charging guns 21, the controller 50 is specifically configured to: determine that a charging mode is a single-gun charging mode if the first charging gun 11 is in a connected state and either of the two second charging guns 21 is in a non-connected state; determine that the charging mode is a dual-gun charging mode if the first charging gun 11 is in the non-connected state and either of the two second charging guns 21 is in the connected state; and determine that the charging mode is a three-gun charging mode if the first charging gun 11 and either of the two second charging guns 21 are in the connected state.

Using FIG. 2 as an example, the charging pile includes a charging gun A, a charging gun B, and a charging gun C. The charging gun A is the first charging gun, and the charging gun B and the charging gun C are the two second charging guns. The vehicle includes a charging interface A, a charging interface B, and a charging interface C. The charging interface A is the first charging interface, and the charging interface B and the charging interface C are the two second charging interfaces that respectively correspond to the charging gun B and the charging gun C.

When the controller confirms a connection status of the charging gun A according to the first detection loop, the controller confirms connection statuses of the charging gun B and the charging gun C according to the second detection loop. When the controller confirms that the charging gun A is connected to the charging interface A and neither the charging gun B nor the charging gun C is connected, the controller determines that the charging mode is the single-gun charging mode, and controls the first charging loop to be connected, and charging is performed through the gun A. When the controller 50 confirms that the charging gun A is not connected, the charging gun B is connected to the charging interface B, and the charging gun C is connected to the charging interface C, the controller 50 determines that the charging mode is the dual-gun charging mode, and controls the second charging loop to be connected, and charging is performed through the gun B and the gun C. When the controller 50 confirms that the charging gun A is connected to the charging interface A, the charging gun B is connected to the charging interface B, and the charging gun C is connected to the charging interface C, the controller 50 determines that the charging mode is the three-gun charging mode, and controls both the first charging loop and the second charging loop to be connected, and charging is performed through the gun A, the gun B, and the gun C.

In this embodiment, the charging mode is determined according to the connection status of the charging gun, so that a charging operation is performed on the power battery of the vehicle, and charging of the vehicle can be implemented through a single gun, dual guns, or three guns. In addition, if the controller 50 determines, according to the second detection loop, that only the charging gun B or the charging gun C is in the connected state, the controller 50 controls the charging loop to remain in a disconnected state, and charging is not allowed.

According to some embodiments of the present application, optionally, the controller 50 is further configured to: if the charging mode is a single-gun charging mode, interact with a corresponding charging pile in an offset adjustment manner; if the charging mode is a dual-gun charging mode, interact with the corresponding charging pile in the offset adjustment manner; and if the charging mode is a three-gun charging mode, interact with the corresponding charging pile in a two's complement manner.

The offset adjustment manner is adding a data amount to transmission data. The two's complement manner is, based on one's complement, adding 1 to a lowest bit, or when a symbol bit is unchanged, finding a first bit of an absolute value of a number whose binary code is "1" from a rightmost end to the left, keeping the bit unchanged, and reversing remaining bits leftward.

Specifically, when the controller 50 determines, through the first detection loop 10, that the charging gun A is in the connected state and determines, through the second detection loop 20, that both the charging gun B and the charging gun C are in the non-connected state, the controller 50 determines to use the single-gun charging mode, controls the first charging loop 30 to be connected, and controls a battery management module of the vehicle to interact with a charging pile in the offset adjustment manner, so that the charging gun A is compatible with a charging pile of a national standard during charging.

When the controller 50 determines, through the first detection loop 10, that the charging gun A is not connected, and determines, through the second detection loop 20, that the charging gun B and the charging gun C are in the connected state, the controller 50 determines to use the dual-gun charging mode, controls the second charging loop 40 to be connected, and controls the battery management module of the vehicle to interact with the charging pile in the offset adjustment manner, so that the charging gun B and the charging gun C are compatible with the charging pile of the national standard during charging.

When the controller 50 determines, through the first detection loop 10 and the second detection loop 20, that the charging gun A, the charging gun B, and the charging gun C are all in the connected state, the controller 50 determines to use the three-gun charging mode, controls the first charging loop 30 and the second charging loop 40 to be simultaneously connected, and controls the battery management module of the vehicle to interact with the charging pile in the two's complement manner, so that the vehicle can be charged at a large current on a specific three-gun charging pile.

The interaction information may include information, such as a total capacity, a current capacity, and a charging current of the battery of the vehicle, sent by the controller 50, and may further include information, such as a charging output current and a charging output voltage, sent by a charging gun.

In this embodiment, when the charging mode is the single-gun charging mode or the dual-gun charging mode, the controller 50 interacts with a charging pile corresponding to the first charging gun 11 or a charging pile corresponding to the second charging gun 21 in the offset adjustment manner, so that the single-gun charging mode and the dual-gun charging mode can be compatible with the charging pile of the national standard. When the charging mode is the three-gun mode, interaction is performed with the charging pile corresponding to the first charging gun 11 and the charging pile corresponding to the second charging gun 21 in the two's complement manner, so that the vehicle can be charged at the large current on the specific three-gun charging pile, and the single-gun charging mode and the dual-gun charging mode of the vehicle can be compatible with the charging pile of the national standard.

According to some embodiments of the present application, optionally, a maximum charging current of a power battery corresponding to the single-gun charging mode is 200 A, a maximum charging current of a power battery corresponding to the dual-gun charging mode is 400 A, and a maximum charging current of a power battery corresponding to the three-gun charging mode is 600 A.

When the controller 50 determines, through only the first detection loop 10, that the charging gun A is in the connected state, the controller 50 determines to use the single-gun charging mode, and controls the first charging loop 30 to be connected, to perform charging through the charging gun A. A maximum charging current is 200 A. When the controller 50 determines, through only the second detection loop 20, that the charging gun B and the charging gun C are in the connected state, the controller 50 determines to use the dual-gun charging mode, and controls the second charging loop 40 to be connected, to perform charging through the charging gun B and the charging gun C. A maximum charging current is 400 A, and a current of 200 A is allocated to each charging loop. When the controller 50 determines, through the first detection loop 10 and the second detection loop 20, that the charging gun A, the charging gun B, and the charging gun C are all in the connected state, the controller 50 determines to use the three-gun charging mode, to simultaneously perform charging through the charging gun A, the charging gun B, and the charging gun C. A maximum charging current is 600 A, and a current of 200 A is allocated to each charging loop.

For example, when charging is performed at the large current of 600 A, in the two-way dual-gun technical solution shown in FIG. 6, each charging loop needs to bear a charging current of 300 A, which easily causes an overtemperature of a charging interface and a charging gun head for a vehicle end and a charging pile end, and triggers overtemperature protection, causing current limitation of charging. For a battery end, overload of a high-voltage control relay is easily caused, reducing a service life of the relay. However, in the present application, a third charging loop is added. The third charging loop and the second charging loop share a third charging switch k3 and the fourth charging switch k4, and a charging interface C is added to the entire vehicle end. When charging is performed at the large current of 600 A is performed, the current of 300 A is allocated to each charging loop in the dual-gun solution, while the current of 200 A is allocated to each charging loop in the three-gun solution of the present application. In comparison, in a large-current charging process, in the three-gun solution, a case in which the overtemperature of the charging interface and the charging gun head that causes the current limitation of charging does not easily occur, thereby reducing load of electronic components, and ensuring normal use of the components and maintenance of the service life.

According to some embodiments of the present application, as shown in FIG. 7, the vehicle 1000 includes the vehicle charging system 1100.

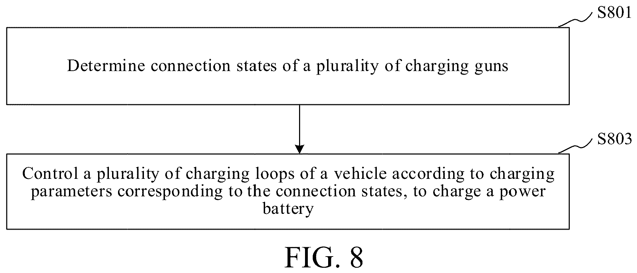

According to some embodiments of the present application, as shown in FIG. 8, the vehicle charging method may include the following steps.

S801: Determine connection statuses of a plurality of charging guns.

S803: Control a plurality of charging loops of a vehicle according to charging parameters corresponding to the connection statuses, to charge a power battery.

In some embodiments, the vehicle charging method further includes: determining a charging mode of the power battery of the vehicle according to the connection statuses; and interacting, according to the charging mode, with charging piles corresponding to the plurality of charging guns.

In some embodiments, if the charging mode is a single-gun charging mode, interaction is performed with a charging pile in an offset adjustment manner; if the charging mode is a dual-gun charging mode, interaction is performed with the charging pile in the offset adjustment manner; and if the charging mode is a three-gun charging mode, interaction is performed with the charging pile in a two's complement manner.

In some embodiments, a maximum charging current of a power battery corresponding to the single-gun charging mode is 200 A, a maximum charging current of a power battery corresponding to the dual-gun charging mode is 400 A, and a maximum charging current of a power battery corresponding to the three-gun charging mode is 600 A.

According to some embodiments of the present application, a computer-readable storage medium is provided, storing a program, where the program, when executed by a processor, implements the vehicle charging method.

It should be noted that, for descriptions about the vehicle, the method, and the storage medium, refer to the descriptions about the system.

Finally, it should be noted that the foregoing embodiments are only used to illustrate the technical solution of the present application, not to limit it. Although the present applicant has been described in detail with reference to the foregoing embodiments, it should be understood by a person of ordinary skill in the art that the technical solution described in the foregoing embodiments can still be modified or some or all of the technical features thereof can be equivalently replaced. However, these modifications or substitutions do not depart the essence of the corresponding technical solution from the scope of the technical solution of each embodiment of the present application, and should be covered in the scope of the claims and descriptions of the present application. Especially, as long as there is no structural conflict, the various technical features mentioned in each embodiment can be combined in any manner. The present application is not limited to the particular embodiments disclosed herein, but includes all technical solutions that fall within the scope of the claims.

## Claims

1. A vehicle charging system, comprising:
a first detection loop, configured to detect a connection status of a first charging gun;
a second detection loop, configured to detect connection statuses of a plurality of second charging guns;
a first charging loop, configured to charge a power battery of a vehicle through the first charging gun;
a plurality of second charging loops, wherein the plurality of second charging loops are in one-to-one correspondence with the plurality of second charging guns, and each second charging loop is configured to charge the power battery through a corresponding charging gun; and
a controller, configured to determine the connection status of the first charging gun and the connection statuses of the plurality of second charging guns, and control the first charging loop and the plurality of second charging loops according to a charging parameter corresponding to the connection status, to charge the power battery.

2. The vehicle charging system according to claim 1, further comprising:
a first charging interface, wherein a first connection confirming end of the first charging interface is connected to the first detection loop, and the connection status of the first charging gun is determined by detecting, through the first detection loop, a voltage of the first connection confirming end; and
a plurality of second charging interfaces, wherein after being connected to each other, a second connection confirming end of each of the plurality of second charging interfaces is connected to the second detection loop, and the connection statuses of the plurality of second charging guns are determined by detecting, through the second detection loop, a voltage of the second connection confirming end.

3. The vehicle charging system according to claim 2, wherein both the first detection loop and the second detection loop comprise:
a voltage dividing circuit, wherein an input end of the voltage dividing circuit is connected to a corresponding connection confirming end, and is configured to divide a voltage of the corresponding connection confirming end to obtain a first voltage; and
a filter circuit, wherein an input end of the filter circuit is connected to an output end of the voltage dividing circuit, and is configured to filter the first voltage to obtain a second voltage; and
the controller is connected to an output end of the filter circuit, and is configured to determine a connection status of the corresponding charging gun according to the second voltage.

4. The vehicle charging system according to claim 3, wherein the voltage dividing circuit comprises:
a first resistor, wherein a first end of the first resistor is connected to a preset power supply;
a second resistor, wherein a first end of the second resistor and a second end of the first resistor are connected and form a first node, a second end of the second resistor is grounded, and the first node is connected to the corresponding connection confirming end;
a third resistor, wherein a first end of the third resistor is connected to the first node, and a second end of the third resistor is connected to the input end of the filter circuit; and
a fourth resistor, wherein a first end of the fourth resistor is connected to the second end of the third resistor, and a second end of the fourth resistor is grounded.

5. The vehicle charging system according to claim 3, wherein the filter circuit comprises:
a fifth resistor, wherein a first end of the fifth resistor is connected to the output end of the voltage dividing circuit, and a second end of the fifth resistor is connected to the controller; and
a first capacitor, wherein a first end of the first capacitor is connected to the second end of the fifth resistor, and a second end of the first capacitor is grounded.

6. The vehicle charging system according to any one of claims 2 to 5, wherein the first charging gun and each of the plurality of second charging guns comprise:
a sixth resistor, wherein a first end of the sixth resistor is connected to a third connection confirming end of the corresponding charging gun, and a second end of the sixth resistor is grounded.

7. The vehicle charging system according to claim 2, wherein the first charging loop comprises:
a first charging switch, wherein a first end of the first charging switch is connected to a positive terminal of the power battery, and a second end of the first charging switch is connected to a first charging connection positive terminal of the first charging interface; and
a second charging switch, wherein a first end of the second charging switch is connected to a negative terminal of the power battery, and a second end of the second charging switch is connected to a first charging connection negative terminal of the first charging interface.

8. The vehicle charging system according to claim 2, wherein the second charging loop comprises:
a third charging switch, wherein a first end of the third charging switch is connected to a positive terminal of the power battery, and a second end of the third charging switch is separately connected to a second charging connection positive terminal of each of the plurality of second charging interfaces; and
a fourth charging switch, wherein a first end of the fourth charging switch is connected to a negative terminal of the power battery, and a second end of the fourth charging switch is separately connected to a second charging connection negative terminal of each of the plurality of second charging interfaces.

9. The vehicle charging system according to claim 1, wherein when there are two second charging guns, the controller is further configured to:
determine that a charging mode is a single-gun charging mode if the first charging gun is in a connected state and either of the two second charging guns is in a non-connected state;
determine that the charging mode is a dual-gun charging mode if the first charging gun is in the non-connected state and either of the two second charging guns is in the connected state; and
determine that the charging mode is a three-gun charging mode if the first charging gun and either of the two second charging guns are in the connected state.

10. The vehicle charging system according to claim 9, wherein the controller is further configured to:
if the charging mode is the single-gun charging mode, interact with a charging pile in an offset adjustment manner;
if the charging mode is the dual-gun charging mode, interact with the charging pile in the offset adjustment manner; and
if the charging mode is the three-gun charging mode, interact with the charging pile in a two's complement manner.

11. The vehicle charging system according to claim 9 or 10, wherein a maximum charging current of a power battery corresponding to the single-gun charging mode is 200 A, a maximum charging current of a power battery corresponding to the dual-gun charging mode is 400 A, and a maximum charging current of a power battery corresponding to the three-gun charging mode is 600 A.

12. A vehicle, comprising the vehicle charging system according to any one of claims 1 to 11.

13. A vehicle charging method, comprising:
determining connection statuses of a plurality of charging guns; and
controlling a plurality of charging loops of a vehicle according to charging parameters corresponding to the connection statuses, to charge a power battery.

14. The vehicle charging method according to claim 13, further comprising:
determining a charging mode of the power battery of the vehicle according to the connection statuses; and
interacting, according to the charging mode, with charging piles corresponding to the plurality of charging guns.

15. The vehicle charging method according to claim 14, wherein
if the charging mode is a single-gun charging mode, interaction is performed with a charging pile in an offset adjustment manner;
if the charging mode is a dual-gun charging mode, interaction is performed with the charging pile in the offset adjustment manner; and
if the charging mode is a three-gun charging mode, interaction is performed with the charging pile in a two's complement manner.

16. The vehicle charging method according to claim 15, wherein a maximum charging current of a power battery corresponding to the single-gun charging mode is 200 A, a maximum charging current of a power battery corresponding to the dual-gun charging mode is 400 A, and a maximum charging current of a power battery corresponding to the three-gun charging mode is 600 A.

17. A computer-readable storage medium, storing a program, and when the program is executed by a processor, the vehicle charging method according to any one of claims 13 to 16 is implemented.
